# EUROPEAN PATENT APPLICATION

(11) **EP 4 468 496 A1**
(43) Date of publication of application: **27.11.2024**
(21) Application number: 22961791.5
(22) Date of filing: 14.10.2022
(51) Int. Cl.: H01M 50/35

(54) **BATTERY AND ELECTRIC APPARATUS**

(71) Applicant: Contemporary Amperex Technology Co., Limited, Ningde, Fujian 352100 (CN)
(72) Inventor: WU, Kai, Ningde, Fujian 352100 (CN); CHEN, Xiaobo, Ningde, Fujian 352100 (CN); LI, Yao, Ningde, Fujian 352100 (CN); KE, Jianhuang, Ningde, Fujian 352100 (CN)
(74) Representative: Rowlands, Stuart Michael
(86) International application number: PCT/CN2022/125419
(87) International publication number: WO 2024/077604

(57) **Abstract**

Embodiments of the present application provide a battery and an electric apparatus, capable of enhancing the safety performance of the battery. A battery (10) comprises: a plurality of battery cells (20), wherein at least one battery cell (20) is provided with a first pressure relief mechanism (213); a box body (110), being provided with a second pressure relief mechanism (113); and an enclosure mechanism (30), used for defining a first gas discharging space (310) corresponding to the first pressure relief mechanism (213) of the at least one battery cell (20), and provided with an opening (301) communicated with the first gas discharging space (310). When the first pressure relief mechanism (213) is actuated, an emission of the at least one battery cell (20) enters the first gas discharging space (310) from the first pressure relief mechanism (213) and is discharged to the second pressure relief mechanism (113) via the opening (301), and the minimum length of the discharging path of the emission between the first pressure relief mechanism (213) and the second pressure relief mechanism (113) is greater than the shortest distance between the first pressure relief mechanism (213) and the second pressure relief mechanism (113).

## Description

### TECHNICAL FIELD

Embodiments of the present application relate to the field of batteries, and more particularly, to a battery and an electrical apparatus.

### BACKGROUND

With the development of the times, electric vehicles have huge market prospects due to their high environmental protection, low noise, low use cost and other advantages, and can effectively promote energy conservation and emission reduction, which is beneficial to the development and progress of society. For electric vehicles, battery technology is an important factor related to their development.

In the development of battery technology, in addition to improving the performance of batteries, safety is also an issue that cannot be ignored. If the safety of a battery cannot be guaranteed, the battery cannot be used. Therefore, how to enhance the safety performance of batteries is an urgent technical problem to be solved in the battery technology.

### SUMMARY OF THE INVENTION

The present application provides a battery and an electrical device, which can improve the safety performance of the battery.

In a first aspect, a battery is provided, including: a plurality of battery cells, at least one of the plurality of battery cells having a first pressure relief mechanism; a box for accommodating the plurality of battery cells, and the box having a second pressure relief mechanism; and an enclosure mechanism for enclosing and forming a first exhaust space corresponding to the first pressure relief mechanism of at least one battery cell, the enclosure mechanism being provided with an opening in communication with the first exhaust space. When the first pressure relief mechanism is actuated, the discharge from at least one battery cell enters the first exhaust space from the first pressure relief mechanism and is discharged to the second pressure relief mechanism through the opening. The minimum length of the discharge path between the first pressure relief mechanism and the second pressure relief mechanism is greater than the shortest distance between the first pressure relief mechanism and the second pressure relief mechanism.

Through the technical solutions of the embodiments of the present application, the arrangement of the enclosure mechanism can prolong the discharge path of the discharge inside the box of the battery, so that the minimum length of the discharge path is greater than the shortest distance between the first pressure relief mechanism and the second pressure relief mechanism, thereby reducing the temperature of the discharge inside the box, making the temperature of the discharge when it is discharged from the box of the battery to the outside through the second pressure relief mechanism be lower, and improving the safety performance of the battery.

In some possible implementations, the opening is located in the enclosure mechanism at a position far away from the second pressure relief mechanism.

Through the technical solution of this embodiment, arranging the opening in the enclosure mechanism at a position far away from the second pressure relief mechanism can make the distance between the opening and the second pressure relief mechanism long, thereby further prolonging the discharge path of the discharge of the battery cells inside the box of the battery, further reducing the temperature of the discharge when it arrives at the second pressure relief mechanism, and improving the safety performance of the battery.

In some possible embodiments, the opening faces the box walls of the box other than the box wall where the second pressure relief mechanism is located.

Through the technical solution of this embodiment, the opening of the enclosure mechanism can be designed accordingly according to the setting of the second pressure relief mechanism of the box, thereby ensuring that the opening does not face the box wall where the second pressure relief mechanism is located, and increasing the distance between the opening and the second pressure relief mechanism, thereby further prolonging the discharge path of the discharge of the battery cells inside the box of the battery, to further reduce the temperature of the discharge when it arrives at the second pressure relief mechanism, and improve the safety performance of the battery.

In some possible embodiments, the opening is located in the middle area of the box.

Through the technical solution of this embodiment, the opening of the enclosure mechanism is located in the middle area of the box, and the distance between the opening and the second pressure relief mechanism located on the box wall of the box can also be increased, thereby prolonging the discharge path of the discharge of the battery cells inside the box of the battery, further reducing the temperature of the discharge when it arrives at the second pressure relief mechanism, and improving the safety performance of the battery.

In some possible embodiments, the number of the enclosure mechanisms is multiple, and the multiple enclosure mechanisms are arranged at intervals.

Through the technical solution of this embodiment, multiple enclosure mechanisms are provided in the box of the battery. The multiple enclosure mechanisms can be flexibly set and adjusted according to actual needs, so as to better guide the discharge of battery cells at different positions in the box, and further improve the overall safety performance of the battery.

In some possible embodiments, the openings of two adjacent enclosure mechanisms among the multiple enclosure mechanisms are provided on two adjacent walls of the two adjacent enclosure mechanisms, and the openings of the two adjacent enclosure mechanisms are staggered from each other.

Through the technical solution of this embodiment, the openings of adjacent enclosure mechanisms among the multiple enclosure mechanisms are staggered to each other, which can prevent the high-temperature discharge of battery cells received by the first exhaust space formed by one enclosure mechanism from causing greater impact and damage to other battery cells corresponding to the adjacent enclosure mechanisms, and also prevent the pressure in the first exhaust space from being too high, ensuring the safety performance of the battery.

In some possible embodiments, the first wall of at least one battery cell is provided with a first pressure relief mechanism, the first wall of the at least one battery cell is disposed opposite to the first box wall of the box, and the enclosure mechanism is disposed between the first box wall and the first wall of the at least one battery cell.

Through the technical solution of this embodiment, it is convenient for the enclosure mechanism to be arranged and installed between the first box wall and the first wall of at least one battery cell, and it is also convenient for the enclosure mechanism to enclose the space corresponding to the first pressure relief mechanism of the at least one battery cell to form the first exhaust space.

In some possible embodiments, the enclosure mechanism is attached to the first box wall and the first wall of at least one battery cell, and the second pressure relief mechanism is provided on a box wall of the box other than the first box wall.

Through the technical solution of this embodiment, it is not only convenient for the enclosure mechanism to be stably installed in the box, but also convenient for the enclosure mechanism to guide the direction of the discharge of the at least one battery cell, thus prolonging the discharge path of the discharge inside the box and improving the safety performance of the battery.

In some possible embodiments, the second box wall of the box intersects with the first box wall of the box, and the second pressure relief mechanism is provided on the second box wall; a second exhaust space is formed between the enclosure mechanism and the second box wall, the second exhaust space is in communication with the first exhaust space through the opening, and the discharge enters the second exhaust space through the opening and is discharged to the second pressure relief mechanism.

Through the technical solution of this embodiment, the first exhaust space and the second exhaust space are formed inside the box through separating by the enclosure mechanism. The second exhaust space is in communication with the second box wall of the box, so that the position design of the second pressure relief mechanism on the second box wall of the box can be facilitated, which is beneficial to further prolonging the discharge path of the discharge inside the box and ensuring the safety performance of the battery.

In some possible embodiments, at least one battery cell is arranged to form a battery cell sequence, the first wall of each battery cell in the battery cell sequence is provided with two electrode terminals, and the first pressure relief mechanism is provided between the two electrode terminals; and the enclosure mechanism is arranged between the two electrode terminals of each battery cell in the battery cell sequence.

Through the technical solution of this embodiment, on the one hand, the enclosure mechanism is relatively close to the first pressure relief mechanism, so the enclosure mechanism can effectively block and guide the discharge from the first pressure relief mechanism. On the other hand, the enclosure mechanism can prevent the discharge from the first pressure relief mechanism from affecting the electrode terminals or other components of the battery cell, further ensuring the safety performance of the battery.

In some possible embodiments, an isolation component is provided between the first box wall and the first wall of at least one battery cell, and the isolation component is used to form an electrical cavity and an exhaust cavity that are isolated from each other inside the box; the electrical cavity is used for accommodating at least one battery cell, and the discharge of the at least one battery cell is discharged to the exhaust cavity via the isolation component; the enclosure mechanism is arranged in the exhaust cavity and attached to the isolation component and the first box wall; and the enclosure mechanism is used for enclosing and forming a first exhaust space corresponding to the first pressure relief mechanism of the at least one battery cell in the exhaust cavity.

Through the technical solution of the embodiment of the present application, the box is divided into an electrical cavity and an exhaust cavity that are isolated from each other by the isolation component, so that the discharge of the battery cells in the electrical cavity will be discharged to the exhaust cavity through the isolation component first, without directly affecting the electrical structure of the battery cells in the electrical cavity, thereby further improving the safety performance of the battery. Further, the enclosure mechanism is arranged in the exhaust cavity for guiding the discharge so that it can only be discharged through the opening in the enclosure mechanism, thus prolonging the discharge path of the discharge inside the box, and further improving the safety performance of the battery.

In some possible embodiments, the second pressure relief mechanism is provided on a box wall of the box corresponding to the exhaust cavity.

Through the technical solutions of the embodiment of the present application, the discharge can be conveniently discharged from the exhaust cavity, and the discharge will not affect the electrical structure in the electrical cavity.

In some possible embodiments, the second pressure relief mechanism is arranged on a box wall of the box other than the first wall.

Through the technical solutions of the embodiment of the present application, the second pressure relief mechanism is not provided on the first box wall but is provided on another box wall, which can prolong the discharge path of the discharge inside the box, thereby improving the safety of the battery.

In some possible embodiments, a pressure relief area corresponding to the first pressure relief mechanism of at least one battery cell is formed in the isolation component, and the discharge of the at least one battery cell is discharged to the exhaust cavity through the pressure relief area, and the enclosure mechanism is used for enclosing and forming a first exhaust space corresponding to the pressure relief area in the exhaust cavity.

Through the technical solution of this embodiment, the pressure relief area is arranged in the isolation component, so that the discharge from the first pressure relief mechanism can be allowed to pass through more effectively, and the influence of the discharge on the electrical components in the electrical cavity can be prevented. The enclosure mechanism encloses the space corresponding to the pressure relief area, and can indirectly enclose the space corresponding to the first pressure relief mechanism of the battery cell, thereby effectively guiding the discharge and comprehensively ensuring the safety performance of the battery.

In some possible embodiments, the isolation component is a thermal management component configured to regulate the temperature of the battery cell.

Through the technical solution of this embodiment, the thermal management component is reused as an isolation component, which can form the electrical cavity and the exhaust cavity that are isolated from each other in the box to ensure the safety of the battery. In addition, due to the existence of the thermal management component, the battery cell can be further thermally managed to further improve the safety performance of the battery.

In some possible embodiments, a first filtering hole is formed in the enclosure mechanism, the first filtering hole being used for filtering solid particles in the discharge.

Through the technical solution of this embodiment, the first filtering hole provided in the enclosure mechanism is mainly used to allow gas in the discharge to pass through, and solid particles with large particle sizes in the discharge can be filtered by the first filtering hole, and the solid particles cannot be discharged out of the first exhaust space through the first filtering hole, so that high-temperature solid particles discharged to the second pressure relief mechanism can be reduced through the technical solution, further improving the safety of the battery. Furthermore, arranging the first filtering hole in the enclosure mechanism can speed up the exhaust speed and pressure relief speed of the first exhaust space and prevent the pressure in the first exhaust space from being too high. At the same time, when the number of first filtering holes is multiple, the gas flows discharged from the multiple first filtering holes can collide with each other to produce certain flow disturbance, thereby reducing the harm caused by direct gas ejection.

In some possible embodiments, the enclosure mechanism is a discontinuous structure, the enclosure mechanism is formed by multiple enclosure parts, and the gap between two adjacent enclosure parts among the multiple enclosure parts forms the first filtering hole.

Through the technical solution of this embodiment, on the basis of forming the first filtering hole, the discontinuous design of the enclosure mechanism improves the convenience of processing. The enclosure mechanism does not need to be integrally formed, and multiple enclosure substructures can be manufactured separately to form the enclosure mechanism.

In some possible embodiments, at least one of a filtering component, a gas absorbing component, and a cooling component is provided in the discharge path of the discharge between the first pressure relief mechanism and the second pressure relief mechanism.

Through the technical solution of this embodiment, at least one of a filtering component, a gas absorbing component and a cooling component is provided in the discharge path, which can further reduce the harm of the discharge discharged to the outside of the box and improve the safety performance of the battery.

In some possible embodiments, the filtering component includes a second filtering hole or a curved gas flow channel, and the second filtering hole or the curved gas flow channel is used for filtering solid particles in the discharge.

Through the technical solution of this embodiment, the second filtering hole or the curved gas flow channel is easy to implement and can play a good role in filtering solid particles.

In some possible embodiments, the gas absorbing component is formed from a gas absorbing material used for absorbing flammable gases in the discharge.

Through the technical solution of this embodiment, the gas absorbing component is easy to implement, and it can absorb flammable gases in the discharge to prevent safety hazards caused by the flammable gases to the battery.

In some possible embodiments, the cooling component is formed from a heat-absorbing material that is used to absorb heat from the discharge to cool the discharge.

Through the technical solution of this embodiment, the cooling component is easy to implement, and it absorbs heat from the discharge to cool it, which can further reduce the temperature of the discharge when it is discharged to the outside of the box, thereby improving the safety performance of the battery.

In some possible embodiments, the maximum temperature T1 of the discharge at the first pressure relief mechanism and the maximum temperature T2 of the discharge at the second pressure relief mechanism satisfy the following relationship: T1-T2≥300°C.

Through the technical solution of this embodiment, after the discharge discharged by the battery cell through the first pressure relief mechanism passes through a long discharge path inside the box, its temperature when it arrives at the second pressure relief mechanism is significantly lower than its temperature at the first pressure relief mechanism, thereby preventing safety hazards when the discharge is discharged to the outside of the battery.

In some possible embodiments, the maximum temperature T2 of the discharge at the second pressure relief mechanism is less than or equal to 300°C.

Through the technical solution of this embodiment, after the discharge discharged by the battery cell through the first pressure relief mechanism passes through a long discharge path inside the box, its temperature when it arrives at the second pressure relief mechanism is relatively low, thereby preventing more reliably safety hazards when the discharge is discharged to the outside of the battery and ensuring the safety performance of the battery.

In some possible embodiments, the melting point of the material of the enclosure mechanism is not lower than 200°C.

Through the technical solution of this embodiment, the enclosure mechanism can resist the impact of the high-temperature discharge from the battery cell, prevent the high-temperature discharge from affecting the reliability of the enclosure mechanism, and comprehensively ensure the safety performance of the battery.

In a second aspect, an electrical apparatus is provided, comprising the battery as described in the first aspect or any possible embodiment of the first aspect, the battery being used to provide electrical energy.

Through the technical solutions of the embodiments of the present application, the arrangement of the enclosure mechanism can prolong the discharge path of the discharge inside the box of the battery, so that the minimum length of the discharge path is greater than the shortest distance between the first pressure relief mechanism and the second pressure relief mechanism, thereby reducing the temperature of the discharge inside the box, making the temperature of the discharge when it is discharged from the box of the battery to the outside through the second pressure relief mechanism be lower, and improving the safety performance of the battery.

### BRIEF DESCRIPTION OF THE DRAWINGS

In order to illustrate the technical solutions of the embodiments of the present application more clearly, the drawings required in the embodiments of the present application are briefly introduced below. It will be apparent that the drawings described below are only some embodiments of the present application. For those of ordinary skill in the art, other drawings can also be obtained according to the drawings without any creative efforts.
FIG. 1 is a schematic structural diagram of a vehicle according to an embodiment of the present application;
FIG. 2 is a schematic structural diagram of a battery according to an embodiment of the present application;
FIG. 3 is a schematic structural diagram of a battery cell according to an embodiment of the present application;
FIG. 4 is a schematic structural diagram of a battery according to an embodiment of the present application;
FIG. 5 is another schematic structural diagram of a battery according to an embodiment of the present application;
FIG. 6 is another schematic structural diagram of a battery according to an embodiment of the present application;
FIG. 7 is another schematic structural diagram of a battery according to an embodiment of the present application;
FIG. 8 is a schematic diagram of an explosive structure of a battery according to an embodiment of the present application;
FIG. 9 is a schematic top view of the battery in FIG. 8;
FIG. 10 is another schematic diagram of an explosive structure of a battery according to an embodiment of the present application;
FIG. 11 is a schematic top view of the battery in FIG. 10;
FIG. 12 is another schematic diagram of an explosive structure of a battery according to an embodiment of the present application;
FIG. 13 is a schematic bottom view of the battery in FIG. 12;
FIG. 14 is two schematic structural diagrams of a pressure relief area enclosed by an enclosure mechanism according to an embodiment of the present application;
FIG. 15 is another two schematic structural diagrams of a battery according to an embodiment of the present application.

In the accompanying drawings, the accompanying drawings are not drawn to actual scale.

### DETAILED DESCRIPTION

Embodiments of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "plurality of means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application.

In the present application, the term "and/or" is only an association relationship for describing associated objects, indicating that there may be three relationships, for example, A and/or B may represent three situations: A exists alone, both A and B exist, and B exists alone. In addition, the character "/" in the present application generally means that the associated objects before and after it are in an "or" relationship.

Unless otherwise defined, all technical and scientific terms used in the present application have the same meaning as commonly understood by those skilled in the art to which the present application belongs. The terms used in the applied specification of present application are for the purpose of describing specific embodiments only, and are not intended to limit the present application. The terms "include/comprise" and "have" and any variations thereof in the specification and claims of the present application as well as in the above description of drawings are intended to cover a non-exclusive inclusion. The terms "first," "second," "third," and the like in the specification and claims of the present application or in the accompany drawings are used to distinguish different objects, not to describe a particular sequence or primary-secondary relationship.

Reference to "an embodiment" in the present application means that a particular feature, structure, or characteristic described in connection with the embodiment can be included in at least one embodiment of the present application. The appearance of this phrase in various places in the Specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the field of new energy, the importance of batteries as the main power source for electrical apparatuses, such as electric vehicles, ships, or spacecraft, is self-evident. In the present application, a battery refers to a single physical module that includes one or more battery cells to provide higher voltage and capacity. The battery generally includes a box for encapsulating one or more battery cells. The box can prevent liquid or other foreign matters from affecting charging or discharging of the battery cells. Optionally, the battery mentioned in the present application may be called a battery pack.

Optionally, the battery cell may include a lithium-ion secondary battery, a lithium-ion primary battery, a lithium sulfur battery, a sodium lithium-ion battery, a sodium-ion battery, or a magnesium-ion battery and so on, which will not be limited in the embodiments of the present application. The battery cell may be in a cylindrical shape, a flat shape, a cuboid shape, or another shape, which is also not limited in the embodiments of the present application. The battery cells are generally classified into three types according to encapsulating manners: cylindrical battery cells, prismatic battery cells and pouch cells, which will also not be limited in the embodiments of the present application.

With the development of battery technology, it is necessary to consider many design factors, such as energy density, cycle life, discharge capacity, C-rate, and other performance parameters. In addition, the safety of the battery should also be considered.

For the battery, the main safety hazard comes from the charging and discharging processes. In order to improve the safety performance of the battery, a pressure relief mechanism is generally provided for the battery cell. The pressure relief mechanism refers to an element or component that is actuated to relieve an internal pressure or heat when the internal pressure or temperature of the battery cell reaches a predetermined threshold. The predetermined threshold may be adjusted according to different design requirements. The predetermined threshold may depend on the material of one or more of the positive electrode plate, the negative electrode plate, the electrolytic solution, and the separator in the battery cell. The pressure relief mechanism may take the form of an element or component that is sensitive to pressure or temperature, for example. That is, when the internal pressure or temperature of the battery cell reaches a predetermined threshold, the pressure relief mechanism is actuated, thereby creating a channel through which the internal pressure or heat can be relieved. After the pressure relief mechanism is actuated, high-temperature and high-pressure substances inside the battery cell are discharged outwardly from the pressure relief mechanism as discharge. In this way, the pressure and heat in the battery cell can be released at a controllable pressure or temperature, thereby avoiding potential, more serious accidents. The discharge from the battery cell include, but is not limited to: high-temperature and high-pressure gas generated by reaction, an electrolytic solution, dissolved or split positive and negative electrode plates, fragments of a separator, flames, etc.

However, as the energy density of the battery system increases, the temperature and speed of the discharge from the battery cell and the proportion of solid particles in the discharge increase significantly. If the discharge behavior and path of the discharge are not specifically designed, the discharge with high temperature will easily catch fire when it is discharged to the outside of the box and encounter oxygen, which will cause great safety hazards.

In view of this, the present application provides a battery, including: a plurality of battery cells, a box, and an enclosure mechanism, wherein at least one battery cell among the plurality of battery cells has a first pressure relief mechanism. The box is used for accommodating the plurality of battery cells and has a second pressure relief mechanism. The enclosure mechanism is used for enclosing and forming a first exhaust space corresponding to the first pressure relief mechanism of the at least one battery cell, and the enclosure mechanism is provided with an opening in communication with the first exhaust space, wherein when the first pressure relief mechanism is actuated, the discharge from the at least one battery cell enters the first exhaust space from the first pressure relief mechanism and is discharged to the second pressure relief mechanism through the opening, and the minimum length of the discharge path of the discharge between the first pressure relief mechanism and the second pressure relief mechanism is greater than the shortest distance between the first pressure relief mechanism and the second pressure relief mechanism.

Through this technical solution, the battery is provided with an enclosure mechanism, the first exhaust space enclosed by the enclosure mechanism can receive the discharge discharged by the at least one battery cell through the first pressure relief mechanism, the enclosure mechanism is provided with an opening in communication with the first exhaust space, and the discharge can be discharged to the second pressure relief mechanism of the box through the opening. The minimum length of the discharge path of the discharge between the first pressure relief mechanism and the second pressure relief mechanism is greater than the shortest distance between the first pressure relief mechanism and the second pressure relief mechanism. Through the arrangement of the enclosure mechanism of the embodiments of the present application, the enclosure mechanism can prolong the discharge path of the discharge inside the box of the battery, so that the minimum length of the discharge path is greater than the shortest distance between the first pressure relief mechanism and the second pressure relief mechanism, thereby reducing the temperature of the discharge inside the box, making the temperature of the discharge when it is discharged from the box of the battery to the outside through the second pressure relief mechanism be lower, and improving the safety performance of the battery.

The technical solutions described in the embodiments of the present application are all applicable to various apparatuses using batteries, such as electromobiles, electric tools, electric vehicles, ships, and spacecraft. For example, the spacecraft include airplanes, rockets, space shuttles, spaceships, etc.

It should be understood that the technical solutions described in the embodiments of the present application are not only applicable to the foregoing apparatuses, but also applicable to all apparatuses using batteries. However, for the sake of brevity, the following embodiments take electric vehicles as an example for description.

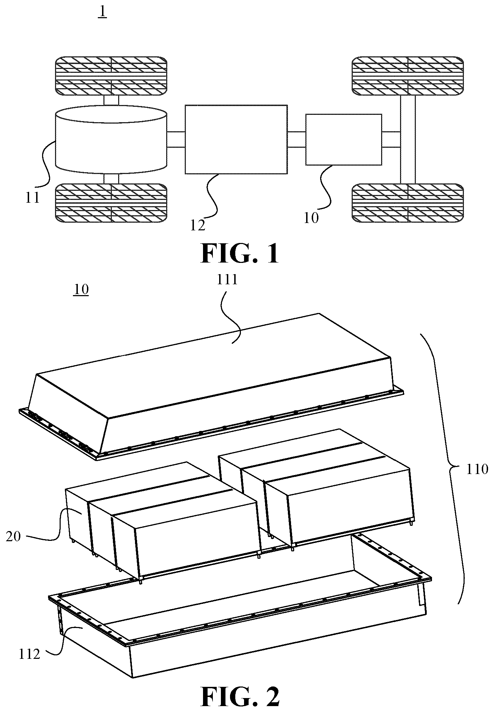

For example, FIG. 1 is a schematic structural diagram of a vehicle 1 according to an embodiment of the present application. The vehicle 1 may be a fuel vehicle, a gas vehicle, or a new energy vehicle. The new energy vehicle may be an all-electric vehicle, a hybrid vehicle or an extended-range electric vehicle, or the like. A motor 11, a controller 12 and a battery 10 may be provided inside the vehicle 1, and the controller 12 is configured to control the battery 10 to supply power to the motor 11. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can be used not only as an operation power supply of the vehicle 1, but also as a driving power supply of the vehicle 1, replacing or partially replacing fuel or natural gas to provide driving power for the vehicle 1.

In order to meet different power requirements, the battery may include a plurality of battery cells, wherein the plurality of battery cells may be in series connection, parallel connection, or series-parallel connection. The series-parallel connection refers to a combination of series connection and parallel connection. The battery may also be referred to as a battery pack. Optionally, first, a plurality of battery cells may be in series connection, parallel connection, or series-parallel connection to form a battery module, and then, a plurality of battery modules may be in series connection, parallel connection, or series-parallel connection to form a battery. In other words, a plurality of battery cells may directly form a battery, or may first form a battery module, and then, the battery modules form a battery.

For example, as shown in FIG. 2, which is a schematic structural diagram of a battery 10 according to an embodiment of the present application, and the battery 10 may include a plurality of battery cells 20. The battery 10 may further include a box 110 (alternatively called an enclosure). The interior of the box 110 is a hollow structure, and the plurality of battery cells 20 are accommodated in the box 110. As shown in FIG. 2, the box 110 may include two parts, which are referred to as a first part 111 and a second part 112 respectively, and the first part 111 and the second part 112 are snap-fitted together. The shapes of the first part 111 and the second part 112 may be determined according to the combined shape of the plurality of battery cells 20, and the first part 111 and the second part 112 may each have an opening. For example, both the first part 111 and the second part 112 may be hollow rectangular solids and each have only one surface being an open surface, the opening of the first part 111 and the opening of the second part 112 are arranged opposite to each other, and the first part 111 and the second part 112 are snap-fitted to each other to form the box 110 having a closed chamber. After the plurality of battery cells 20 are connected in a parallel connection or series connection or series-parallel connection manner, they are placed in the box 110 formed after the first part 111 and the second part 112 are snap-fitted together.

Optionally, the battery 10 may further include other structures, which will not be described in detail herein. For example, the battery 10 may also comprise a bus component. The bus component is configured to implement the electric connection between the plurality of battery cells 20, such as parallel connection, series connection or series-parallel connection. Specifically, the bus component may implement the electrical connection between the battery cells 20 by connecting electrode terminals of the battery cells 20. Further, the bus component may be fixed to the electrode terminals of the battery cells 20 by welding. Electric energy of the plurality of battery cells 20 may be further led out through an electrically conductive mechanism penetrating the box. Optionally, the electrically conductive mechanism may also belong to the bus component.

Depending on different power requirements, the number of battery cells 20 may be set to any value. The plurality of battery cells 20 can be connected in series, in parallel or in series-parallel connection to implement larger capacity or power. Each battery 10 may include a large quantity of battery cells 20, and therefore, in order to facilitate installation, the battery cells 20 may be arranged in groups, and each group of battery cells 20 forms a battery module. The quantity of battery cells 20 included in the battery module is not limited and may be set according to the requirements.

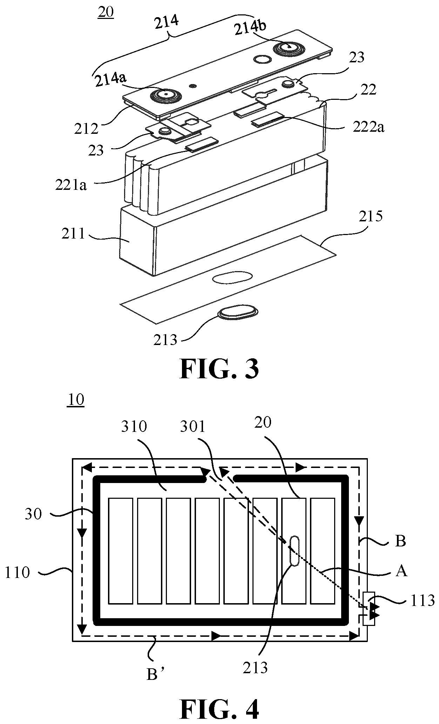

For example, as shown in FIG. 3, a schematic structural diagram of a battery cell 20 according to an embodiment of the present application is shown. The battery cell 20 includes one or a plurality of electrode assemblies 22, a case 211, and a cover plate 212. Walls of the case 211 and the cover plate 212 are both referred to as walls of the battery cell 20. The case 211 is shaped according to the shape of one or more electrode assemblies 22 after combination. For example, the case 211 may be a hollow cuboid or cube or cylinder, and one surface of the case 211 has an opening such that one or more electrode assemblies 22 can be placed in the case 211. The cover plate 212 covers the opening and is connected to the case 211 to form a closed cavity in which the electrode assembly 22 is placed. The case 211 is filled with an electrolyte, such as an electrolytic solution.

The battery cell 20 may further comprise two electrode terminals 214, and the two electrode terminals 214 may be provided on the cover plate 212. The cover plate 212 is generally in the shape of a flat plate, and the two electrode terminals 214 are fixed on a flat plate surface of the cover plate 212. The two electrode terminals 214 are a positive electrode terminal 214a and a negative electrode terminal 214b, respectively. Each electrode terminal 214 is correspondingly provided with a connecting member 23 also called a current collecting member 23, which is located between the cover plate 212 and the electrode assembly 22 and configured to electrically connect the electrode assembly 22 to the electrode terminal 214.

As shown in FIG. 3, each electrode assembly 22 has a first tab 221a and a second tab 222a with opposite polarities. For example, when the first tab 221a is a positive tab, the second tab 222a is a negative tab. The first tab 221a of one or a plurality of electrode assemblies 22 is connected to one electrode terminal via one connecting member 23, and the second tab 222a of the one or a plurality of electrode assemblies 22 is connected to the other electrode terminal via the other connecting member 23.

As an example, a first pressure relief mechanism 213 may also be provided on one wall of the battery cell 20. The first pressure relief mechanism 213 is configured, when an internal pressure or temperature of the battery cell 20 reaches a threshold, to be actuated to relieve the internal pressure or heat.

Optionally, in an embodiment of the present application, the first pressure relief mechanism 213 and the electrode terminals 214 are arranged on different walls of the battery cell 20. For example, as shown in FIG. 3, the electrode terminals 214 of the battery cell 20 may be arranged on the top wall of the battery cell 20, that is, the cover plate 212. The first pressure relief mechanism 213 is disposed on another wall of the battery cell 20 that is different from the top wall. For example, the first pressure relief mechanism 213 is disposed on the bottom wall 215 opposite to the top wall.

Optionally, in another embodiment of the present application, the first pressure relief mechanism 213 and the electrode terminals 214 are arranged on the same wall of the battery cell 20. As an example, the electrode terminals 214 and the first pressure relief mechanism 213 both may be arranged on the top wall of the battery cell 20, that is, the cover plate 212.

The first pressure relief mechanism 213 mentioned above can be a part of the wall on which it is located, or it can be a separate structure from the wall on which it is located, fixed on the wall by welding, for example. For example, in the embodiment shown in FIG. 3, when the first pressure relief mechanism 213 is a part of the bottom wall 215, the first pressure relief mechanism 213 may be formed by providing a notch in the bottom wall 215, with the thickness of the bottom wall 215 corresponding to the notch being less than the thickness of regions of the first pressure relief mechanism 213 except the notch. Moreover, the first pressure relief mechanism 213 may have various possible pressure relief mechanisms, which is not limited in the embodiments of the present application. For example, the first pressure relief mechanism 213 may be a temperature-sensitive pressure relief mechanism, and the temperature-sensitive pressure relief mechanism is configured to be capable of being melt when the internal temperature of the battery cell 20 provided with the first pressure relief mechanism 213 reaches a threshold; and/or the first pressure relief mechanism 213 may be a pressure-sensitive pressure relief mechanism, and the pressure-sensitive pressure relief mechanism is configured to be capable of being ruptured when the internal air pressure of the battery cell 20 provided with the first pressure relief mechanism 213 reaches a threshold.

FIG. 4 is a schematic structural diagram of a battery 10 according to an embodiment of the present application. Optionally, FIG. 4 may be a top view, bottom view, or side view of the battery 10.

As shown in FIG. 4, the battery 10 includes a plurality of battery cells 20, a box 110, and an enclosure mechanism 30. Among them, at least one battery cell 20 among the plurality of battery cells 20 has a first pressure relief mechanism 213. The box 110 is used to accommodate the plurality of battery cells 20, and the box 110 has a second pressure relief mechanism 113. The enclosure mechanism 30 is used to enclose a first exhaust space 310 corresponding to the first pressure relief mechanism 213 of the at least one battery cell 20, and the enclosure mechanism 30 is provided with an opening 301 in communication with the first exhaust space 310. When the first pressure relief mechanism 213 is actuated, the discharge from the at least one battery cell 20 enters the first exhaust space 310 from the first pressure relief mechanism 213 and is discharged to the second pressure relief mechanism 113 through the opening 301, and the minimum length B of the discharge path of the discharge between the first pressure relief mechanism 213 and the second pressure relief mechanism 113 is greater than the shortest distance A between the first pressure relief mechanism 213 and the second pressure relief mechanism 113.

Specifically, in the battery 10 of the embodiment of the present application, the first pressure relief mechanism 213 in the battery cell 20 can be located on the same wall of the battery cell 20 as the electrode terminal 214 of the battery cell 20, as shown in FIG. 3. Alternatively, the first pressure relief mechanism 213 and the electrode terminal 214 may be located on different walls of the battery cell 20. Specifically, the related technical solution of the battery cell 20 and the first pressure relief mechanism 213 can be found in the relevant description of the embodiment shown in FIG. 3 above, which will not be repeated here.

The box 110 is used to accommodate the plurality of battery cells 20 in the battery 10, and the specific shape of the box 110 can be adapted to the overall shape of the plurality of battery cells 20. Optionally, the box 110 may be a rectangular hollow box including a first part 111 and a second part 112 in the embodiment shown in FIG. 2, for accommodating at least one battery cell 20 in a rectangular shape or other shapes. The related technical solution of the box 110 can be found in the related description of the embodiment shown in FIG. 2 above, which will not be repeated here.

A second pressure relief mechanism 113 may be provided on the box wall of the box 110, and the second pressure relief mechanism 113 may be in communication with the internal space of the box 110. When the first pressure relief mechanism 213 is actuated, the discharge from the battery cells 20 enters the internal space of the box 110 from the first pressure relief mechanism 213. Therefore, the second pressure relief mechanism 113 can be used to discharge the discharge to the outside of the box 110 to ensure the safety performance of the battery 10.

Optionally, the second pressure relief mechanism 113 may be a temperature-sensitive pressure relief mechanism or a pressure-sensitive pressure relief mechanism, aiming to actuate the second pressure relief mechanism 113 when the internal temperature and/or pressure of the box 110 is greater than a preset threshold, and the internal gas of the box 110 can be discharged to the outside of the box 110 through the second pressure relief mechanism 113. The embodiment of the present application does not limit the specific implementation of the second pressure relief mechanism 113.

Continuing to refer to FIG. 4, in the embodiment of the present application, the enclosure mechanism 30 is disposed in the internal space of the box 110, and the enclosure mechanism 30 can enclose and form a first exhaust space 310 corresponding to the first pressure relief mechanism 213 of the at least one battery cell 20, and the enclosure mechanism 30 is provided with an opening 301 in communication with the first exhaust space 310. The first exhaust space 310 may include a space facing the first pressure relief mechanism 213 of the at least one battery cell 20. The enclosure mechanism 30 is provided with an opening 301. Therefore, the enclosure mechanism 30 does not implement a fully enclosed enclosure, but provides an exhaust outlet for the first exhaust space 310 at the opening 301.

Optionally, the enclosure mechanism 30 may be a frame-type structure having an opening 301. As an example, as shown in FIG. 4, the enclosure mechanism 30 can be a rectangular frame structure, or, in other alternative embodiments, the enclosure mechanism 30 can also be a frame structure of other shapes, such as a circular frame structure, a polygonal frame structure, etc., and the embodiment of the present application does not limit the specific shape of the frame structure.

When the first pressure relief mechanism 213 of at least one battery cell 20 in the battery 10 is actuated, the discharge from the at least one battery cell 20 is discharged through the first pressure relief mechanism 213 into the first exhaust space 310 formed by the enclosure mechanism 30, and the discharge is further discharged to the second pressure relief mechanism 113 through the opening 301 in communication with the first exhaust space 310. Due to the arrangement of the enclosure mechanism 30, the discharge cannot be directly discharged from the first pressure relief mechanism 213 to the second pressure relief mechanism 113, but are guided by the enclosure mechanism 30 to its opening 301 and then discharged from the opening 301 to the second pressure relief mechanism 113. The minimum length B of the discharge path of the discharge between the first pressure relief mechanism 213 and the second pressure relief mechanism 113 is greater than the shortest distance A between the first pressure relief mechanism 213 and the second pressure relief mechanism 213.

Optionally, as shown in the short dotted line segment in FIG. 4, the shortest distance A between the first pressure relief mechanism 213 and the second pressure relief mechanism 113 can be the connecting distance between the center of the first pressure relief mechanism 213 and the center of the second pressure relief mechanism 113.

Optionally, there may be multiple discharge paths for the discharge between the first pressure relief mechanism 213 and the second pressure relief mechanism 113, and the minimum length B among the multiple discharge paths can be calculated based on the dimensions of the enclosure mechanism 30, box 110, and other components in battery 10, as well as the relative positions of the first pressure relief mechanism 213 and the second pressure relief mechanism 113.

As an example, the long dotted arrows in FIG. 4 illustrate schematic diagrams of two discharge paths in which the discharge is discharged to the second pressure relief mechanism 113 through the first pressure relief mechanism 213 and the opening 301. The discharge path where the discharge is discharged to the right after discharged from the opening 301 is the first discharge path, and the discharge path where the discharge is discharged to the left after discharged from the opening 301 is the second discharge path. The length B of the first discharge path is less than the length B' of the second discharge path. The length B of the first discharge path may be the minimum length B of the discharge path between the first pressure relief mechanism 213 and the second pressure relief mechanism 113. The minimum length B of the discharge path is greater than the shortest distance A between the first pressure relief mechanism 213 and the second pressure relief mechanism 113.

To sum up, through the technical solutions of the embodiments of the present application, the arrangement of the enclosure mechanism 30 can prolong the discharge path of the discharge inside the box 110 of the battery 10, so that the minimum length B of the discharge path is greater than the shortest distance A between the first pressure relief mechanism 213 and the second pressure relief mechanism 113, thereby reducing the temperature of the discharge inside the box 110, making the temperature of the discharge when it is discharged from the box 110 of the battery 10 to the outside through the second pressure relief mechanism 113 be lower, and improving the safety performance of the battery 10.

In some embodiments, the opening 301 in the enclosure mechanism 30 may be located at a position in the enclosure mechanism 30 away from the second pressure relief mechanism 113.

It can be understood that the enclosure mechanism 30 can be formed by providing an opening 301 on a closed frame structure. The closed frame structure can be composed of multiple enclosure parts arranged along the enclosure direction, and the multiple enclosure parts have the same shape and size. Each enclosure part has a certain distance from the second pressure relief mechanism 113. The average number of the distances from the multiple enclosure parts to the second pressure relief mechanism 113 is a. Among the multiple enclosure parts, if the distance from a certain enclosure part to the second pressure relief mechanism 113 is greater than a, the position of the enclosure part can be understood as a position in the enclosure mechanism 30 that is far away from the second pressure relief mechanism 113, then the opening 301 can be provided at the position of the enclosure part.

Through the technical solution of this embodiment of the present application, arranging the opening 301 in the enclosure mechanism 30 at a position far away from the second pressure relief mechanism 113 can make the distance between the opening 301 and the second pressure relief mechanism 113 long, thereby further prolonging the discharge path of the discharge of the battery cell 20 inside the box 110 of the battery 10, further reducing the temperature of the discharge when it arrives at the second pressure relief mechanism 113, and improving the safety performance of the battery 10.

In some embodiments, the opening 301 in the enclosure mechanism 30 above may face a box wall of the box 110 other than the box wall where the second pressure relief mechanism 113 is located.

As an example, as shown in FIG. 4, a second pressure relief mechanism 113 is provided on a box wall of the box 110, and the opening 301 in the enclosure mechanism 30 may face the box wall of the box 110 adjacent to the box wall where the second pressure relief mechanism 113 is located. Or, in other examples, the opening 301 may also face the box wall of the box 110 opposite to the wall where the second pressure relief mechanism 113 is located. In the technical solution of this example, the opening 301 is oriented in the way of being away from or even facing away from the second pressure relief mechanism 113. Therefore, this technical solution can increase the distance between the opening 301 and the second pressure relief mechanism 113, thereby further prolonging the discharge path of the discharge of the battery cell 20 inside the box 110 of the battery 10.

In other examples, the box 110 may be provided with multiple second pressure relief mechanisms 113. For example, the box 110 may be provided with second pressure relief mechanisms 113 on two opposite box walls respectively, so that the opening 301 of the enclosure mechanism 30 can face box walls of the box 110 other than the two opposite box walls.

As an illustration, the number of the openings 301 shown in FIG. 4 is only one. In other alternative embodiments, the number of the openings 301 can also be multiple, and the multiple openings 301 all face the box walls of the box 110 other than the box wall where the second pressure relief mechanism 113 is located.

Through the technical solution of this embodiment of the present application, the opening 301 of the enclosure mechanism 30 can be designed accordingly according to the setting of the second pressure relief mechanism 113 of the box 110, thereby ensuring that the opening 301 does not face the box wall where the second pressure relief mechanism 113 is located, and increasing the distance between the opening 301 and the second pressure relief mechanism 113, thereby further prolonging the discharge path of the discharge of the battery cell 20 inside the box 110 of the battery 10, to further reduce the temperature of the discharge when it arrives at the second pressure relief mechanism 113, and improve the safety performance of the battery 10.

In the embodiment shown in FIG. 4 above, the battery 10 may only include one enclosure mechanism 30 to facilitate the installation of the enclosure mechanism 30 in the box 110. In some other embodiments, the battery 10 may also include multiple enclosure mechanisms 30, and the multiple enclosure mechanisms 30 are arranged at intervals.

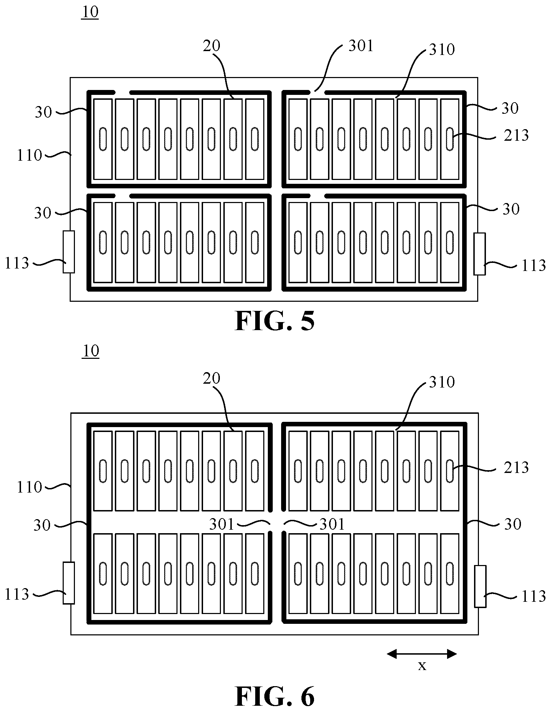

In this case, FIG. 5 shows another schematic structural diagram of a battery 10 according to an embodiment of the present application. Similar to FIG. 4 above, optionally, FIG. 5 may be a top view, bottom view, or side view of the battery 10.

As an example, as shown in FIG. 5, the plurality of battery cells 20 in the battery 10 may include four groups of battery cells 20. Corresponding to the four groups of battery cells 20, the battery 10 may include four enclosure mechanisms 30, each enclosure mechanism 30 being used to form a first exhaust space 310 corresponding to the first pressure relief mechanism 213 of a group of battery cells 20.

In addition, in the battery 10, the second pressure relief mechanism 113 is disposed on two opposite box walls of the box 110. At this time, the opening 301 of each enclosure mechanism 30 can face the box walls of the box 110 other than the two box walls where the second pressure relief mechanism 113 is located.

Optionally, as shown in FIG. 5, the relative positions of the openings 301 of the four enclosure mechanisms 30 in the four enclosure mechanisms 30 are the same, and the orientations of the four openings 301 can also be the same. Or, in other alternative embodiments, the relative positions of the openings 301 of the four enclosure mechanisms 30 in the four enclosure mechanisms 30 may also be different, and the orientations of some of the openings 301 in the four openings 301 may also be different.

Through the technical solution of this embodiment of the present application, multiple enclosure mechanisms 30 are provided in the box 110 of the battery 10. The multiple enclosure mechanisms 30 can be flexibly set and adjusted according to actual needs, so as to better guide the discharge of battery cells 20 at different positions in the box 100, and further improve the overall safety performance of the battery 10.

In some embodiments, the opening 301 of the enclosure mechanism 30 may be located in the middle area of the box 110.

As an example, FIG. 6 shows another schematic structural diagram of a battery 10 according to an embodiment of the present application.

In the embodiment shown in FIG. 6, the plurality of battery cells 20 in the battery 10 may include two groups of battery cells 20. Corresponding to the two groups of battery cells 20, the battery 10 may include two enclosure mechanisms 30. Optionally, in the battery 10, the second pressure relief mechanism 113 is disposed on two opposite walls of the box 110. At this time, the opening 301 of each enclosure mechanism 30 can be located in the middle area of the box 110.

Optionally, the two walls where the second pressure relief mechanism 113 is located may be two walls of the box 110 that are arranged oppositely in the x direction. When the box 110 is a rectangular box, the x direction may be the length direction, width direction or height direction of the box 110. At this time, the opening 301 of each enclosure mechanism 30 may be located in the middle area of the box 110 in the x direction.

Through the technical solution of the above embodiment, the opening 301 of the enclosure mechanism 30 is located in the middle area of the box 110, and the distance between the opening 301 and the second pressure relief mechanism 113 located on the box wall of the box 110 can also be increased, thereby prolonging the discharge path of the discharge of the battery cell 20 inside the box 110 of the battery 10, further reducing the temperature of the discharge when it arrives at the second pressure relief mechanism 113, and improving the safety performance of the battery 10.

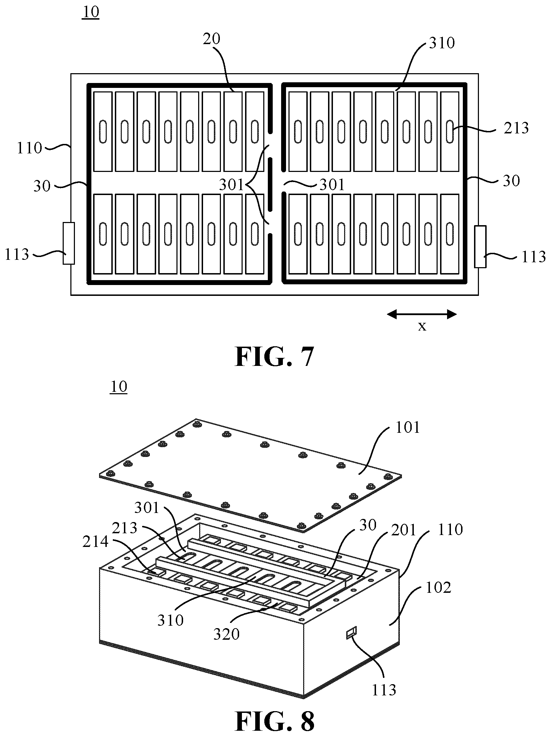

FIG. 7 shows another schematic structural diagram of a battery 10 according to an embodiment of the present application.

As shown in FIG. 7, the openings of two adjacent enclosure mechanisms 30 among the multiple enclosure mechanisms 30 are provided on two adjacent walls of the two adjacent enclosure mechanisms 30, and the openings 301 of the two adjacent enclosure mechanisms 30 are staggered.

As an example, among the two adjacent enclosure mechanisms 30 shown in FIG. 7, one enclosure mechanism 30 is provided with one opening 301, and the other enclosure mechanism 30 is provided with two openings 301. The three openings 301 are arranged staggered from each other to avoid direct convection between the two first exhaust spaces 310 enclosed by the two enclosure mechanisms 30.

In the embodiment of the present application, the openings 301 of two adjacent enclosure mechanisms 30 are not directly facing each other, but are staggered. That is, the discharge from the opening 301 of the first enclosure mechanism 30 will not directly enter the first exhaust space 310 formed by the second enclosure mechanism 30 through the opening 301 of the second enclosure mechanism 30, to prevent high-temperature discharge from causing greater impact and damage, and to prevent the pressure of the first exhaust space 310 from being too high, ensuring the safety performance of battery 10.

It should be noted that in the above embodiments shown in FIGS. 4 to 7, the number of enclosure mechanisms 30 and the number of battery cells 20 enclosed in each enclosure mechanism 30 are only for illustration and not limitation. The number and enclosure manner of the enclosure mechanisms 30 can be determined according to the number and arrangement of the battery cells 20 in the battery 10, which are not specifically limited in the embodiment of the present application.

FIG. 8 shows a schematic diagram of an explosive structure of a battery 10 according to an embodiment of the present application.

As shown in FIG. 8, the first wall 201 of at least one battery cell 20 is provided with a first pressure relief mechanism 213, the first wall 201 of the at least one battery cell 20 is disposed opposite to the first box wall 101 of the box 110, and the enclosure mechanism 30 is disposed between the first box wall 101 and the first wall 201 of the at least one battery cell 20.

In this embodiment, the first wall 201 of the at least one battery cell 20 may be located on the same plane. Through this arrangement, it is convenient for the enclosure mechanism 30 to be arranged and installed between the first box wall 101 and the first wall 201 of the at least one battery cell 20, and it is also convenient for the enclosure mechanism to enclose the space corresponding to the first pressure relief mechanism 213 of the at least one battery cell 20 to form the first exhaust space 310.

Optionally, as shown in FIG. 8, the enclosure mechanism 30 is attached to the first box wall 101 of the box 110 and the first wall 201 of the at least one battery cell 20, and the second pressure relief mechanism 113 is provided on a wall of the box 110 other than the first box wall 101.

As an example, the box 110 shown in FIG. 8 can be a rectangular hollow box with six planar box walls, where the first box wall 101 of the box 110 and the first wall 201 of the battery cell 20 are arranged opposite to each other, and the first box wall 101 of the box 110 and the first wall 201 of the battery cell 20 are parallel to each other. The enclosure mechanism 30 can be directly attached between the first box wall 101 and the first wall 201 of the battery cell 20, or the enclosure mechanism 30 can also be indirectly attached (for example, through a glue layer or a fastener) between the first box wall 101 and the first wall 201 of the battery cell 20. The first box wall 101 is not provided with the second pressure relief mechanism 113, and the second pressure relief mechanism 113 can be provided on any box wall other than the first box wall 101.

The first exhaust space 310 enclosed by the enclosure mechanism 30 between the first box wall 101 and the first wall 201 of the battery cell 20 is a sealed space in the first direction perpendicular to the first wall 201 of the battery cell 20, and a space with an opening in the second direction parallel to the first wall 201 of the battery cell 20. Since the second pressure relief mechanism 113 is disposed on box walls other than the first box wall 101, the discharge discharged by the battery cells 20 through the first pressure relief mechanism 213 cannot be discharged through the first box wall 101 in the first direction, but moves in the second direction, and is discharged through the opening of the first exhaust space 310 in the second direction and the second pressure relief mechanism 113 located in other box walls.

Through the technical solution of this embodiment of the present application, it is not only convenient for the enclosure mechanism 30 to be stably installed in the box 110, but also convenient for the enclosure mechanism 30 to guide the direction of the discharge of the at least one battery cell 20, thus prolonging the discharge path of the discharge inside the box 110 and improving the safety performance of the battery 10.

Optionally, in some embodiments, as shown in FIG. 8, the second box wall 102 of the box 110 intersects with the first box wall 101 of the box 110, and the second pressure relief mechanism 113 is disposed on the second box wall 102. A second exhaust space 320 is formed between the enclosure mechanism 30 and the second box wall 102. The second exhaust space 320 is connected to the first exhaust space 310 through the opening 301, and the discharge from at least one battery cell 20 enters the second exhaust space 320 through the opening 301 and is discharged to the second pressure relief mechanism 113.

Specifically, in the technical solution of this embodiment, the box 110 may have four second box walls 102 intersecting with the first box wall 101 of the box 110. For example, if the first box wall 101 of the box 110 is the top wall or the bottom wall of the box 110, the four second box walls 102 may be the side walls of the box 110. The number of the second pressure relief mechanisms 113 may be one or more, and the one or more second pressure relief mechanisms 113 may be disposed on any one or more of the four second box walls 102.

On the basis that the enclosure mechanism 30 encloses the first exhaust space 310 between the first box wall 101 and the first wall 201 of the battery cell 20, the enclosure mechanism 30 can form a second exhaust space 320 with the second box wall 102. The second exhaust space 320 is used to communicate the first exhaust space 310 and the second pressure relief mechanism 113 located on the second box wall 102.

In the technical solution of this embodiment, the first exhaust space 310 and the second exhaust space 320 are formed inside the box 110 through separating by the enclosure mechanism 30. The second exhaust space 320 is in communication with the second box wall 102 of the box 110, so that the position design of the second pressure relief mechanism 113 on the second box wall 102 of the box 110 can be facilitated, which is beneficial to further prolonging the discharge path of the discharge inside the box 110 and ensuring the safety performance of the battery 10.

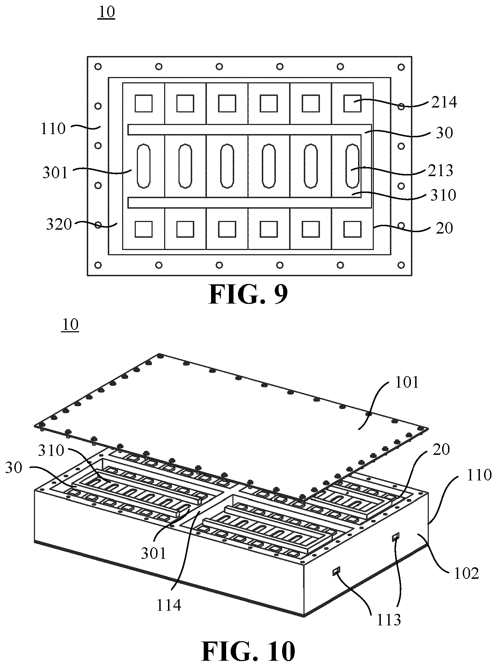

Corresponding to the exploded view of the embodiment shown in FIG. 8, FIG. 9 shows a schematic top view of the battery 10 in FIG. 8.

As shown in FIGS. 8 and 9, in some embodiments, at least one battery cell 20 is arranged to form a battery cell sequence, the first wall 201 of each battery cell 20 in the battery cell sequence is provided with two electrode terminals 214, and the first pressure relief mechanism 213 is provided between the two electrode terminals 214. The enclosure mechanism 30 is disposed between the two electrode terminals 214 of each battery cell in the battery cell sequence.

As an example, in the embodiment shown in FIGS. 8 and 9, a plurality of battery cells 20 are arranged into a row along the width direction of the battery cells 20, and the row of battery cells 20 can be understood as a battery cell sequence. Alternatively, in other examples, multiple battery cells 20 may also be arranged in other ways to form a battery cell sequence. The embodiment of the present application does not limit the specific arrangement of the battery cells 20 in the battery cell sequence.

The first wall 201 of each battery cell 20 in the battery cell sequence is provided with a first pressure relief mechanism 213 and two electrode terminals 214. The enclosure mechanism 30 is disposed close to the first pressure relief mechanism 213 of each battery cell 20 in the battery cell sequence, and encloses the space corresponding to the first pressure relief mechanism 213. Further, the enclosure mechanism 30 may be disposed between the two electrode terminals 214 of each battery cell 20 in the battery cell sequence.

Through the technical solution of this embodiment, on the one hand, the enclosure mechanism 30 is relatively close to the first pressure relief mechanism 213, so the enclosure mechanism 30 can effectively block and guide the discharge from the first pressure relief mechanism 213. On the other hand, the enclosure mechanism 30 can prevent the discharge from the first pressure relief mechanism 213 from affecting the electrode terminals 214 or other components of the battery cell 20, further ensuring the safety performance of the battery 10.

Optionally, when the electrode terminal 214 of the battery cell 20 and the first pressure relief mechanism 213 are located on the same wall, as an alternative embodiment, the enclosure mechanism 30 can also enclose the two electrode terminals 214 of the battery cell 20 and the space corresponding to the first pressure relief mechanism 213 at the same time. Through the technical solution of this embodiment, the enclosure mechanism 30 can also achieve the function of blocking and guiding the discharge discharged through the first pressure relief mechanism 213, and prolonging the discharge path of the discharge inside the box 110.

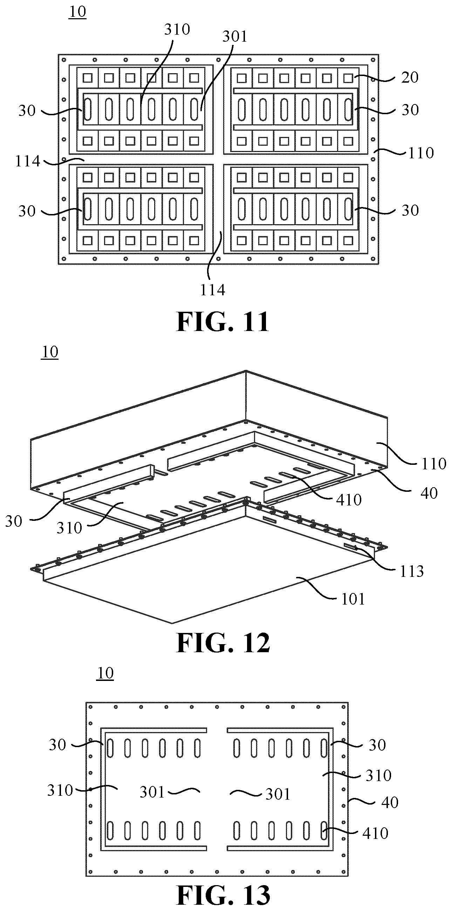

FIGS. 8 and 9 above show a schematic structural diagram of an embodiment of the present application including one enclosure mechanism 30. FIGS. 10 and 11 below show a schematic structural diagram of another embodiment of the present application including multiple enclosure mechanisms 30. FIG. 10 is another schematic exploded view of a battery 10 according to an embodiment of the present application, and FIG. 11 is a top view of the battery 10 in FIG. 10.

As shown in FIGS. 10 and 11, in the embodiment of the present application, the battery 10 may include multiple groups of battery cells 20. As shown in FIGS. 8 and 9, each group of battery cells 20 may include a battery cell sequence formed by arranging at least one battery cell 20. A space corresponding to the first pressure relief mechanism 213 of each group of battery cells 20 is enclosed by an enclosure mechanism 30.

Each of the multiple enclosure mechanisms 30 may be directly attached to the first box wall 101 of the box 110 and the first wall 201 of the group of battery cells 20. Specifically, the related technical solutions about the enclosure mechanism 30 and the group of battery cells 20 can be found in the relevant description of the embodiment shown in FIGS. 8 and 9 above, which will not be repeated here.

Optionally, in some embodiments, the box 110 of the battery 10 may be provided with a crossbeam 114, which may divide the internal space of the box 110 into a plurality of sub-spaces, each subspace being used to accommodate a group of battery cells 20. As an example, as shown in FIGS. 10 and 11, two intersecting crossbeams 114 are provided in the box 110, and the two crossbeams 114 divide the internal space of the box 110 into four sub-spaces.

Optionally, in order to facilitate discharge of the discharge from the battery cells 20 in each sub-space, a second pressure relief mechanism 113 may be provided on the corresponding box wall of each sub-space. For example, for the embodiment shown in FIG. 10, in the two opposite second box walls 102 of the box 110, each second box wall 102 can be provided with two second pressure relief mechanisms 113, that is, there are four second pressure relief mechanisms 113 in the box walls of the box 110.

Optionally, as shown in FIGS. 10 and 11, the openings 301 of the multiple enclosure mechanisms 30 may be located in the middle area of the box 110. Alternatively, in some embodiments, the openings 301 of the multiple enclosure mechanisms 30 may face box walls of the box 110 other than the box wall where the second pressure relief mechanism 113 is located.

In addition to the technical solution in which the enclosure mechanism 30 is attached to the first box wall 101 of the box 110 and the first wall 201 of at least one battery cell 20 shown in FIGS. 8 to 11 above, in other embodiments, another component may be disposed between the first box wall 101 of the box 110 and the first wall 201 of the at least one battery cell 20, and the enclosure mechanism 30 may be attached between the component and the first wall 201 of the at least one battery cell 20.

FIG. 12 shows another schematic exploded view of a battery 10 according to an embodiment of the present application.

As shown in FIG. 12, in the embodiment of the present application, an isolation component 40 is provided between the first box wall 101 of the box 110 and the first wall 201 (not shown in the figure) of at least one battery cell 20. The isolation component 40 is used to form an electrical cavity and an exhaust cavity that are isolated from each other inside the box 110. The electrical cavity is used to accommodate at least one battery cell 20 (not shown in the figure), the enclosure mechanism 30 is provided in the exhaust cavity, the enclosure mechanism 30 is attached to the first box wall 101 of the box 110 and the isolation component 40, and the enclosure mechanism 30 is used to enclose and form a first exhaust space 310 corresponding to the first pressure relief mechanism 213 (not shown in the figure) of at least one battery cell 20 in the exhaust cavity.

Specifically, in the technical solution of this embodiment, the isolation component 40 is used to divide the internal space of the box 110 into an electrical cavity and an exhaust cavity. That is, inside the box 110, the electrical cavity that accommodates at least one battery cell 20 is separated from the exhaust cavity that collects and discharges the discharge of the at least one battery cell 20. In this way, when an abnormality occurs in the battery cell 20, the discharge from the battery cell 20 first enters the exhaust cavity, and the discharge will not directly affect the electrical components in the electrical cavity, so the safety of the battery can be further enhanced.

Optionally, in some embodiments, the isolation component 40 may have a common shared by the electrical cavity and the exhaust cavity. For example, the isolation component 40 may be a wall of the electrical cavity and a wall of the exhaust cavity at the same time. In this way, the discharge from the battery cell 20 can directly enter the exhaust cavity through the isolation component 40, avoiding the introduction of other structural components into the box 110 and affecting the energy density and other performance parameters of the battery 10.

Further, the enclosure mechanism 30 is disposed in the exhaust cavity and is attached to the first box wall 101 of the box 110 and the isolation component 40. The enclosure mechanism 30 forms the first exhaust space 310 between the first box wall 101 and the isolation component 40 to receive and guide discharge of the discharge inside the box 110.

Through the technical solution of the embodiment of the present application, the box 110 is divided into an electrical cavity and an exhaust cavity that are isolated from each other by the isolation component 40, so that the discharge of the battery cells 20 in the electrical cavity will be discharged to the exhaust cavity through the isolation component 40 first, without directly affecting the electrical structure of the battery cells 20 in the electrical cavity, thereby further improving the safety performance of the battery 10. Further, the enclosure mechanism 30 is arranged in the exhaust cavity for guiding the discharge so that it can only be discharged through the opening 301 in the enclosure mechanism 30, thus prolonging the discharge path of the discharge inside the box 110, and further improving the safety performance of the battery 10.

Optionally, the second pressure relief mechanism 113 can be disposed on any box wall of the box 110. Regarding the specific location of the second pressure relief mechanism 113, an exhaust channel in communication with the second pressure relief mechanism 113 and the first exhaust space 310 can be designed inside the box 110.

For example, the second pressure relief mechanism 113 can be disposed on the box wall of the box 110 corresponding to the electrical cavity. In this case, a channel in communication with the electrical cavity and the first exhaust space 310 can be designed in the isolation component 40 to prolong the discharge path of the discharge inside the box 110.

Alternatively, the second pressure relief mechanism 113 can also be provided on the box wall of the box 110 corresponding to the exhaust cavity so that the discharge can be discharged from the exhaust cavity without affecting the electrical structure in the electrical cavity.

Optionally, the second pressure relief mechanism 113 may be disposed on box walls of the box 110 other than the first box wall 101.

Specifically, in the embodiment of the present application, the first box wall 101 and the isolation component 40 can be used to form two opposite walls in the exhaust cavity. After the discharge from the battery cell 20 passes through the isolation component 40, most of it will be directly ejected to the first tank wall 101. Therefore, the second pressure relief mechanism 113 is not provided on the first box wall 101 but is provided on another box wall, which can prolong the discharge path of the discharge inside the box 110, thereby improving the safety of the battery 10.

Optionally, in some embodiments, when the battery 10 is installed on the electrical apparatus, the first box wall 101 of the battery 10 may be the bottom wall of the box 110, and the first wall 201 in which the first pressure relief mechanism 213 is provided in at least one battery cell 20 can also be called the bottom wall of the at least one battery cell 20. The isolation component 40 can separate the internal space of the box 110 into two spaces, wherein the electrical cavity is located below the exhaust cavity. Alternatively, in some other alternative embodiments, the electrical cavity may also be located above the exhaust cavity or in other directions. The embodiment of the present application does not specifically limit the relative positional relationship between the electrical cavity and the exhaust cavity.

Optionally, with continued reference to FIG. 12, in some embodiments, a pressure relief area 410 corresponding to the first pressure relief mechanism 213 of at least one battery cell 20 is formed in the isolation component 40, the discharge of the at least one battery cell 20 is discharged to the exhaust cavity through the pressure relief area 410, and the enclosure mechanism 30 is used for enclosing and forming a first exhaust space 310 corresponding to the pressure relief area 410 in the exhaust cavity.

Optionally, at least one pressure relief area 410 is provided in the isolation component 40. Each pressure relief area can be arranged opposite to the first pressure relief mechanism 213 of one battery cell 20. When the first pressure relief mechanism 213 is actuated, the discharge inside the battery cell 20 is discharged through the pressure relief area 410.

In some embodiments, the pressure relief area 410 in the isolation component 40 may also be specially treated to make it easier to be damaged when the first pressure relief mechanism 213 is actuated. As an example, the pressure relief area 410 may be a weak area whose strength is smaller than the strength of areas of the isolation component 40 except the pressure relief area 410.

Optionally, the isolation component 40 is provided with a groove opposite to the first pressure relief mechanism 213, and the bottom wall of the groove forms a weak area. Since the bottom wall of the groove is weaker than other areas of the isolation component 40 and is easily damaged by the discharge, when the first pressure relief mechanism 213 is activated, the discharge can damage the bottom wall of the groove and enter the exhaust cavity.

Optionally, a weak area can be formed in other ways in the isolation component 40 as the pressure relief area 410, for example, providing a notch in the isolation component 40 to form the weak area, etc., which is not specifically limited in this application.

The enclosure mechanism 30 is used to enclose the space corresponding to the pressure relief area 410 in the isolation component 40 so as to receive the discharge discharged through the first pressure relief mechanism 213 and the pressure relief area 410 to guide the discharge.

Through the technical solution of this embodiment, the pressure relief area 410 is arranged in the isolation component 40, so that the discharge from the first pressure relief mechanism 213 can be allowed to pass through more effectively, and the influence of the discharge on the electrical components in the electrical cavity can be prevented. The enclosure mechanism 30 encloses the space corresponding to the pressure relief area 410, and can indirectly enclose the space corresponding to the first pressure relief mechanism 213 of the battery cell 20, thereby effectively guiding the discharge and comprehensively ensuring the safety performance of the battery 10.

Optionally, in the above embodiment of the present application, the isolation component 40 may be a thermal management component configured to regulate the temperature of the battery cell 20. Optionally, the thermal management component is used for accommodating a fluid to regulate the temperature of a plurality of battery cells. The fluid here may be liquid or gas, and temperature regulation means heating or cooling the plurality of battery cells. In the case of cooling or lowering the temperature of the battery cells, the thermal management component is configured to accommodate a cooling fluid to lower the temperature of the plurality of battery cells. In this case, the thermal management component may also be called a cooling component, a cooling system, or a cooling plate, etc. The fluid accommodated by the thermal management component may also be called a cooling medium or a cooling fluid, and more specifically, may be called a cooling liquid or a cooling gas. In addition, the thermal management component can also be used for heating to raise the temperature of the plurality of battery cells, which is not limited by the embodiments of the present application. Optionally, the fluid may flow in a circulating manner to achieve a better temperature regulation effect. Optionally, the fluid may be water, a mixture of water and ethylene glycol, air, or the like.

Through the technical solution of this embodiment, the thermal management component is reused as an isolation component 40, which can form the electrical cavity and the exhaust cavity that are isolated from each other in the box 110 to ensure the safety of the battery 10. In addition, due to the existence of the thermal management component, the battery cell 20 can be further thermally managed to further improve the safety performance of the battery 10.

FIG. 13 is a schematic bottom view of the battery 10 in FIG. 12.

As shown in FIG. 13, the battery 10 may include a plurality of enclosure mechanisms 30, each enclosure mechanism 30 is used to enclose a space corresponding to a group of pressure relief areas 410, and the group of pressure relief areas 410 corresponds to the first pressure relief mechanism 213 of a group of battery cells 20.

As an example, FIG. 13 shows two adjacent enclosure mechanisms 30, and the openings 301 of the two enclosure mechanisms 30 may be located in the middle area of the exhaust cavity. Alternatively, in alternative embodiments, the openings 301 of the two enclosure mechanisms 30 can also be designed in other ways.

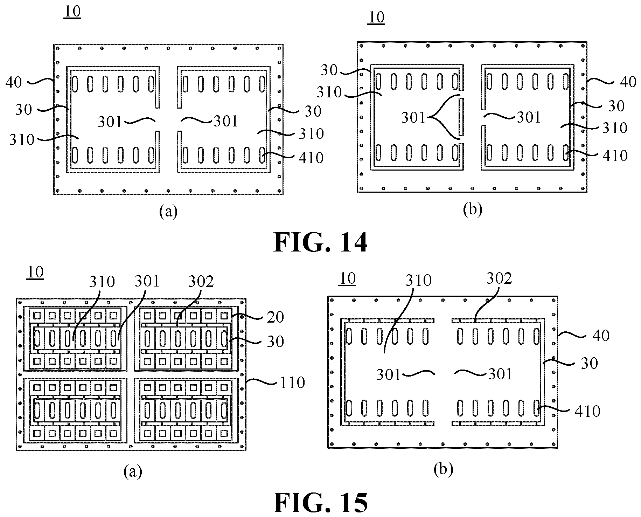

For example, FIG. 14 shows two schematic structural diagrams of a pressure relief area 410 enclosed by an enclosure mechanism 30 according to an embodiment of the present application.

As shown in (a) of FIG. 14, in this embodiment, the two enclosure mechanisms 30 are arranged in a manner similar to FIG. 13, but the opening 301 is smaller than the opening 301 shown in FIG. 13. According to the technical solution of this embodiment, the enclosure mechanism 30 can better guide the discharge, thereby further prolonging the discharge path of the discharge in the exhaust cavity.

As shown in (b) of FIG. 14, in this embodiment, one of the two enclosure mechanisms 30 may be provided with two openings 301, and the other enclosure mechanism 30 is formed with an opening 301. The three openings 301 are staggered to avoid direct convection between the two first exhaust spaces 310 corresponding to the two enclosure mechanisms 30, prevent high-temperature discharge from causing a wider range of influence and damage, and also to prevent the pressure of the first exhaust space 310 from being too high, thus ensuring the safety performance of the battery 10.

It should be noted that FIG. 13 and FIG. 14 are only schematically illustrating the manner in which two adjacent enclosure mechanisms 30 enclose the pressure relief area 410. In other alternative embodiments, the number of enclosure mechanisms 30 may also be one or more than three, and the opening 301 in the enclosure mechanism 30 may be arranged in a manner related to the second pressure relief mechanism 113. The specific design solution can be found in the relevant description of the embodiments mentioned above, which will not be elaborated too much here.

On the basis of the enclosure mechanism 30 of the above embodiment, optionally, a first filtering hole 302 is also formed in the enclosure mechanism 30, and the first filtering hole 302 is used to filter solid particles in the discharge. Optionally, the hole size of the first filtering hole 302 is smaller than the radial size of the opening 301.

As an example, FIG. 15 shows another two schematic structural diagrams of a battery 10 according to an embodiment of the present application. Optionally, (a) in FIG. 15 may be a top view of the embodiment shown in FIG. 10, and (b) in FIG. 15 may be a bottom view of the embodiment shown in FIG. 12.

As shown in FIG. 15, in addition to the larger-sized opening 301, the enclosure mechanism 30 is also formed with a plurality of smaller-sized first filtering holes 302. The plurality of first filtering holes 302 can be distributed in the enclosure mechanism 30 at equal or unequal intervals. Optionally, the position design and facing design of the first filtering hole 302 can be the same as the related design of the opening 301 above. For example, the first filtering hole 302 can also be disposed in the enclosure mechanism 30 at a position away from the second pressure relief mechanism 113, and/or the first filtering hole 302 can also face box walls of the box 110 other than the box wall where the second pressure relief mechanism 113 is located.

Similar to the function of the opening 301, the first filtering hole 302 can also be used to discharge the discharge discharged from the battery cell 20 through the first pressure relief mechanism 213, but the first filtering hole 302 is mainly used to allow the gas in the discharge to pass through, while the solid particles with large particle sizes in the discharge can be filtered by the first filtering hole 302, and the solid particles cannot be discharged out of the first exhaust space 310 through the first filtering hole 302. Therefore, through this technical solution, high-temperature solid particles discharged to the second pressure relief mechanism 113 can be reduced, and the safety of the battery 10 can be further improved.

Furthermore, arranging the first filtering hole 302 in the enclosure mechanism 30 can speed up the exhaust speed and pressure relief speed of the first exhaust space 310 and prevent the pressure in the first exhaust space 310 from being too high. At the same time, when the number of first filtering holes 302 is multiple, the gas flows discharged from the multiple first filtering holes 302 can collide with each other to produce certain flow disturbance, thereby reducing the harm caused by direct gas ejection.

Optionally, in some embodiments, the enclosure mechanism 30 is a discontinuous structure, the enclosure mechanism 30 is formed by multiple enclosure parts, and the gap between two adjacent enclosure parts among the multiple enclosure parts forms the first filtering hole 302.

Through the technical solution of this embodiment, on the basis of forming the first filtering hole 302, the discontinuous design of the enclosure mechanism 30 improves the convenience of processing. The enclosure mechanism 30 does not need to be integrally formed, and multiple enclosure sub-structures can be manufactured separately to form the enclosure mechanism 30.

Optionally, in above embodiments of the present application, at least one of a filtering component, a gas absorbing component, and a cooling component is provided in the discharge path of the discharge between the first pressure relief mechanism 213 and the second pressure relief mechanism 113.

In particular, the filtering component can be used for filtering solid particles in the discharge. The gas absorbing component can be used for absorbing flammable gases in the discharge. The cooling component can be used to absorb heat from the discharge to cool the discharge.

The arrangement of at least one of a filtering component, a gas absorbing component and a cooling component in the discharge path can further reduce the harm of the discharge discharged to the outside of the box 110 and improve the safety performance of the battery 10.

Optionally, the above filtering component can include a second filtering hole or a curved gas flow channel, and the second filtering hole or the curved gas flow channel is used for filtering solid particles in the discharge.

Specifically, the relevant design of the second filtering hole can be the same as the design of the above-mentioned first filtering hole 302. The hole size of the second filtering hole can be smaller than the particle size of the solid particles in the discharge, thereby filtering the solid particles. When the discharge passes through the curved gas flow channel, the solid particles in the discharge are more likely to remain in the gas flow channel, thus achieving a filtering function. In addition, the gas flow channel can also play a role of turbulence, preventing the gas flow in the discharge from directly ejecting to damage the box 110.

Optionally, the gas absorbing component is formed from a gas absorbing material used for absorbing flammable gases in the discharge.

Optionally, the gas absorbing material may be a solid material or a liquid material. For example, the gas absorbing material may be a material with a microporous structure, such as activated carbon. For another example, the gas absorbing material may be a solvent capable of absorbing flammable gases. The solvent may be covered with a shell to form a solvent encapsulation body. The solvent encapsulation body serves as a gas absorbing component and is disposed in the discharge path between the first pressure relief mechanism 213 and the second pressure relief mechanism 113.

In some embodiments, the gas absorbing component and the above-mentioned filtering component may be two separate independent components. Alternatively, in some other embodiments, the gas absorbing component can also be connected to the above-mentioned filtering component. For example, the gas absorbing component may be applied to the filtering component in the form of a coating.

Optionally, the above-mentioned cooling component is formed from a heat-absorbing material for absorbing heat from the discharge to cool the discharge. As an example, and not a limitation, the heat-absorbing material may be a metal material, such as aluminum, copper, steel, etc. Alternatively, the heat-absorbing material may also be a phase change material, such as a cooling liquid.

In some embodiments, the cooling component and the above-mentioned filtering component may be two separate independent components. Or, in some other embodiments, the cooling component can also be integrated with the above-mentioned filtering component. For example, a second filtering hole or a curved gas flow channel is formed on the heat-absorbing material, and this component is both a cooling component and a filtering component.

Optionally, in above embodiments of the application, the maximum temperature T1 of the discharge at the first pressure relief mechanism 213 and the maximum temperature T2 of the discharge at the second pressure relief mechanism 113 satisfy the following relationship: T1-T2>300°C.

Through the technical solution of this embodiment, after the discharge discharged by the battery cell 20 through the first pressure relief mechanism 213 passes through a long discharge path inside the box 110, its maximum temperature when it arrives at the second pressure relief mechanism 113 is significantly lower than its temperature at the first pressure relief mechanism 213, thereby preventing safety hazards when the discharge is discharged to the outside of the battery 10.

Optionally, in above embodiments of the application, the maximum temperature T2 of the discharge at the second pressure relief mechanism 113 is less than or equal to 300°C.

Through the technical solution of this embodiment, after the discharge discharged by the battery cell 20 through the first pressure relief mechanism 213 passes through a long discharge path inside the box 110, its maximum temperature when it arrives at the second pressure relief mechanism 113 is relatively low, thereby preventing more reliably safety hazards when the discharge is discharged to the outside of the battery 10 and ensuring the safety performance of the battery 10.

Optionally, in above embodiments of the application, the melting point of the material of the enclosure mechanism 30 is not lower than 200°C.

In some embodiments, the material of the enclosure mechanism 30 may be a metal material, which may have a melting point above 300°C, and the enclosure mechanism 30 may be applied to batteries 10 with high energy density. Optionally, the material of the enclosure mechanism 30 can also be non-metallic materials, such as rubber, mica, carbon fiber, melamine foam, and foamed polyurethane. In this case, the carbonization temperature of the enclosure mechanism 30 is not lower than 200°C.

Through the technical solution of this embodiment, the material of the enclosure mechanism 30 is a high-temperature resistant material, which can resist the impact of the high-temperature discharge from the battery cell 20, prevent the high-temperature discharge from affecting the reliability of the enclosure mechanism 30, and comprehensively ensure the safety performance of the battery 10.

An embodiment of the present application further provides an electrical apparatus. The electrical apparatus may include a battery 10 in the above embodiments. The battery 10 is configured to supply electric energy to the electrical apparatus. Optionally, the electrical apparatus may be a vehicle 1, a ship or a spacecraft.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery (10), comprising:
a plurality of battery cells (20), at least one of the plurality of battery cells (20) having a first pressure relief mechanism (213);
a box (110) used to accommodate the plurality of battery cells (20), the box (110) having a second pressure relief mechanism (113); and
an enclosure mechanism (30) used for enclosing and forming a first exhaust space (310) corresponding to the first pressure relief mechanism (213) of the at least one battery cell (20), the enclosure mechanism (30) being provided with an opening (301) in communication with the first exhaust space (310), wherein when the first pressure relief mechanism (213) is actuated, the discharge from the at least one battery cell (20) enters the first exhaust space (310) from the first pressure relief mechanism (213) and is discharged to the second pressure relief mechanism (113) through the opening (301), and the minimum length of the discharge path of the discharge between the first pressure relief mechanism (213) and the second pressure relief mechanism (113) is greater than the shortest distance between the first pressure relief mechanism (213) and the second pressure relief mechanism (113).

2. The battery (10) according to claim 1, wherein the opening (301) is located in the enclosure mechanism (30) at a position away from the second pressure relief mechanism (113).

3. The battery (10) according to claim 1 or 2, wherein the opening (301) faces a box wall of the box (110) other than the box wall where the second pressure relief mechanism (113) is located.

4. The battery (10) according to any one of claims 1 to 3, wherein the opening (301) is located in the middle area of the box (110).

5. The battery (10) according to any one of claims 1 to 4, wherein the number of the enclosure mechanisms (30) is multiple, and the multiple enclosure mechanisms (30) are arranged at intervals.

6. The battery (10) according to claim 5, wherein the openings (301) of two adjacent enclosure mechanisms (30) among the multiple enclosure mechanisms (30) are arranged on two adjacent walls of the two adjacent enclosure mechanisms (30), and the openings (301) of the two adjacent enclosure mechanisms (30) are staggered.

7. The battery (10) according to any one of claims 1 to 6, wherein a first wall (201) of the at least one battery cell (20) is provided with the first pressure relief mechanism (213), the first wall (201) of the at least one battery cell (20) is arranged opposite to a first box wall (101) of the box (110), and the enclosure mechanism (30) is arranged between the first box wall (101) and the first wall (201) of the at least one battery cell (20).

8. The battery (10) according to claim 7, wherein the enclosure mechanism (30) is attached to the first box wall (101) and the first wall (201) of the at least one battery cell (20), and the second pressure relief mechanism (113) is provided on a box wall of the box (110) other than the first box wall (101).

9. The battery (10) according to claim 8, wherein a second box wall (102) of the box (110) intersects with the first box wall (101) of the box (110), and the second pressure relief mechanism (113) is provided on the second box wall (102);
a second exhaust space (320) is formed between the enclosure mechanism (30) and the second box wall (102), the second exhaust space (320) is in communication with the first exhaust space (310) through the opening (301), and the discharge enters the second exhaust space (320) through the opening (301) and is discharged to the second pressure relief mechanism (113).

10. The battery (10) according to any one of claims 7 to 9, wherein the at least one battery cell (20) is arranged to form a battery cell sequence, the first wall (201) of each battery cell (20) in the battery cell sequence is provided with two electrode terminals, and the first pressure relief mechanism (213) is arranged between the two electrode terminals; and the enclosure mechanism (30) is arranged between two electrode terminals of each battery cell (20) in the battery cell sequence.

11. The battery (10) according to claim 7, wherein an isolation component (40) is provided between the first box wall (101) and the first wall (201) of the at least one battery cell (20), and the isolation component (40) is used to form an electrical cavity and an exhaust cavity that are isolated from each other inside the box (110);
the electrical cavity is used to accommodate the at least one battery cell (20), the discharge of the at least one battery cell (20) is discharged to the exhaust cavity through the isolation component (40), the enclosure mechanism (30) is provided in the exhaust cavity, the enclosure mechanism (30) is attached to the isolation component (40) and the first box wall (101), and the enclosure mechanism (30) is used for enclosing and forming the first exhaust space (310) corresponding to the first pressure relief mechanism (213) of the at least one battery cell (20) in the exhaust cavity.

12. The battery (10) according to claim 11, wherein the second pressure relief mechanism (113) is provided on a box wall of the box (110) corresponding to the exhaust cavity.

13. The battery (10) according to claim 11 or 12, wherein the second pressure relief mechanism (113) is provided on a box wall of the box (110) other than the first box wall (101).

14. The battery (10) according to any one of claims 11 to 13, wherein a pressure relief area (410) corresponding to the first pressure relief mechanism (213) of the at least one battery cell (20) is formed in the isolation component (40), the discharge of the at least one battery cell (20) is discharged to the exhaust cavity through the pressure relief area (410), and the enclosure mechanism (30) is used for enclosing and forming the first exhaust space (310) corresponding to the pressure relief area (410) in the exhaust cavity.

15. The battery (10) according to any one of claims 11 to 14, wherein the isolation component (40) is a thermal management component, and the thermal management component is used for regulating the temperature of the battery cell (20).

16. The battery (10) according to any one of claims 1 to 15, wherein a first filtering hole (302) is formed in the enclosure mechanism (30), and the first filtering hole (302) is used for filtering solid particles in the discharge.

17. The battery (10) according to claim 16, wherein the enclosure mechanism (30) has a discontinuous structure, the enclosure mechanism (30) is formed by multiple enclosure parts, and the gap between two adjacent enclosure parts among the multiple enclosure parts forms the first filtering hole (302).

18. The battery (10) according to any one of claims 1 to 17, wherein at least one of a filtering component, a gas absorbing component, and a cooling component is provided in the discharge path of the discharge between the first pressure relief mechanism (213) and the second pressure relief mechanism (113).

19. The battery (10) according to claim 18, wherein the filtering component comprises a second filtering hole or a curved gas flow channel, and the second filtering hole or the curved gas flow channel is used for filtering solid particles in the discharge.

20. The battery (10) according to claim 18 or 19, wherein the gas absorbing component is formed from a gas absorbing material used for absorbing flammable gases in the discharge.

21. The battery (10) according to any one of claims 18 to 20, wherein the cooling component is formed from a heat-absorbing material used for absorbing heat from the discharge to cool the discharge.

22. The battery (10) according to any one of claims 1 to 21, wherein the maximum temperature T1 of the discharge at the first pressure relief mechanism (213) and the maximum temperature T2 of the discharge at the second pressure relief mechanism (113) satisfy the following relationship: T1-T2≥300°C.

23. The battery (10) according to claim 22, wherein the maximum temperature T2 of the discharge at the second pressure relief mechanism (113) is less than or equal to 300°C.

24. The battery (10) according to any one of claims 1 to 23, wherein the melting point of the material of the enclosure mechanism (30) is not lower than 200°C.

25. An electrical apparatus, comprising the battery (10) according to any one of claims 1 to 24, the battery (10) being used for providing electric energy.
